# EUROPEAN PATENT APPLICATION

(11) **EP 4 803 393 A1**
(43) Date of publication of application: **09.09.2026**
(21) Application number: 26158998.0
(22) Date of filing: 17.02.2026
(51) Int. Cl.: B60W 30/12

(54) **METHOD FOR ADAPTIVE LANE CENTERING IN A VEHICLE, APPARATUS, DRIVER ASSISTANCE SYSTEM AND VEHICLE**

(30) Priority: 04.03.2025 US 202519069262
(71) Applicant: ZF CV Systems Global GmbH, 3006 Bern (CH)
(72) Inventor: BAPAT, Akshay, Lafayette, 47909 (US); CAMPELL, Brett, West Lafayette, 47906 (US); PAUL, Reenu, Dearborn Heights, 48125 (US); PARSHALL, Evan, Westfield, 46074 (US); SANCHEZ COSSIO, William Fernando, Boise, 83705 (US)
(74) Representative: Rabe, Dirk-Heinrich

(57) **Abstract**

A method (40) for adaptive lane centering (42) in a vehicle (10) comprises: determining (44) a lane center (20); determining (46) a target position (30) of the vehicle (10) relative to the lane center (20); determining (48) a steering behavior parameter (50); changing (52) the target position (30) based on the steering behavior parameter (50). Changing (52) the target position (30) is faster when changing (52) is towards (54) the lane center (20) compared to when changing (52) is away (56) from the lane center (20).

## Description

The invention relates to a method for adaptive lane centering in a vehicle, to an apparatus for use with a lane centering system, to a driver assistance system for a vehicle, and to a vehicle.

Lane centering is a driver assistance technology designed to maintain a vehicle's position within its designated lane on the roadway. Lane centering systems typically employ an integration of cameras, sensors, and algorithms to monitor the lane markings and the vehicle's position relative to these markings. By continuously analyzing this data, the system can make minute adjustments to the steering to ensure that the vehicle remains centered within the lane, thereby minimizing the necessity for constant manual corrections by the driver. This technology is particularly beneficial in mitigating driver fatigue during extended journeys, enhancing safety by preventing inadvertent lane departures, and providing a more comfortable driving experience. Lane centering systems are frequently components of a more comprehensive suite of advanced driver-assistance systems (ADAS) that collectively work to improve vehicle safety and assist the driver in a variety of situations.

Typically, a lane centering system is configured to keep the vehicle at the lane center. However, it may be desirable for the driver to change the lateral position, at which the lane centering system keeps the vehicle. The driver may, for example, have such a desire out of general preference. Or, as another example, a different lateral position by be desirable due to a specific situation on the road. For example, if a particularly wide vehicle is driving in a neighboring lane, it might be safer to change the lateral position in a direction away from that vehicle, i.e. to assume a larger lateral distance to that vehicle, than to stay at the lane center. Both general preference or a specific situation may lead to the driver fighting the lane centering system. Therefore, systems configured to keep the vehicle at a position different from the lane center if necessary have been proposed.

A known system reduces driver fights by providing a predetermined offset to a virtual lane center which needs to be manually entered through a human-machine-interface by the driver. Hence, different drivers must manually adjust offset to virtual center if they need to drive away from center. A drawback is that this system is not driver agnostic. Another drawback is that the driver needs to manually adjust the offset, as the system is not auto-adjusting. Another drawback is that the system does not consider the driving scenario. Another drawback of such a system is that it typically provides only a finite, i.e. limited number of available vehicle positions, i.e. limited positions available for adjusting the position at which the system keeps the vehicle.

Another known system provides an offset to a virtual lane center if it detects a bigger vehicle in an adjacent lane. A drawback is that the system does not consider driver preferences. Another drawback is that additional sensors are required.

US 6,185,492 B1, US 8,977,419 B2, US 2009/0299573 A1 disclose lane centering systems with the ability to change the lateral position, at which the system keeps the vehicle.

It is an object of the invention to improve comfort for the driver when driving with an active lane centering system.

The object is achieved by a method according to claim 1.

According to the present disclosure, a method for adaptive lane centering in a vehicle comprises: determining a lane center; determining a target position of the vehicle relative to the lane center; determining a steering behavior parameter; and changing the target position based on the steering behavior parameter, wherein changing the target position is faster when changing is towards the lane center compared to when changing is away from the lane center.

Determining a lane center may be performed by a lane centering system or a lane keeping assistance system of the vehicle. The method allows for a modular setup and works with different lane centering systems or lane keeping assistance systems.

Changing the target position based on the steering behavior parameter reduces driver fights against the baseline, i.e. the lane center, of a lane centering system while still preserving the core competence of the lane centering system, which is to keep the vehicle stable in the lane.

Changing the target position faster when changing towards the lane center compared to when changing away from the lane center helps promote driving at the actual lane center and improves comfort as well as safety. The center of the lane is usually the safest position for the vehicle and the vehicle will tend towards the center of the lane by changing the target position quicker and, thus, more easily towards the center of the lane. When departing further from the center of the lane, the driver will feel resistance for a relatively long time and will, thus, enforce a target position further away from the center only in case it is particularly important to the driver. This approach allows the driver to conveniently strike a good balance between normally driving at the or close to the center and driving at an offset, if really necessary.

The term "faster" in "changing the target position is faster when changing is towards the lane center compared to when changing is away from the lane center" is intended to compare situations in which all parameters except the direction of change are identical.

The steering behavior parameter may preferably be a deviation in vehicle position from the target position, a vehicle position relative to the lane center, a steering angle, a difference between an actual steering angle and a steering angle requested from a lane centering system, a steering torque, or a difference between an actual steering torque and a steering torque requested from a lane centering system. These parameters are simple to acquire and/or usually readily available in a modern vehicle.

Changing the target position may also be based on more than one steering behavior parameter, for example steering parameters as mentioned above.

The term "vehicle position" generally refers to a lateral position of the vehicle in the current lane. The vehicle position may preferably be defined relative to the lane center.

According to an embodiment, changing the target position is based on a history of the steering behavior parameter. The system can, thus, beneficially account for the driving behavior of the driver and the driving scenario and respond particularly appropriately.

The history may preferably be a history over a predetermined timespan. The predetermined timespan may preferably be at least 0,005 seconds, at least 0,5 seconds or at least 1 second. The predetermined timespan may preferably be at most 6 seconds. These values have proven particularly beneficial as a good balance for being able to quickly react to the drivers needs on the one hand and to correctly determine what the driver wants on the other hand. The timespan may preferably be a timespan immediately before the current time.

Changing the target position may preferably begin less than 0,05 seconds, preferably less than 0,01 seconds after the steering behavior parameter changes towards the lane center.

According to an embodiment, changing the target position is performed continuously. This means that the steering behavior parameter is translated into a continuous change in the target position. Preferably, the stronger the steering behavior parameter departs from the previous target position, the stronger the change in the target position. This allows the driver to control the target position in a fine-grained and intuitive manner.

According to an embodiment, changing the target position is performed based on a Kalman filter. This is a simple solution for allowing the driver to control the target position in a fine-grained and intuitive manner.

Changing the target position may preferably be performed in response to the steering behavior parameter exceeding a threshold value for a predetermined timespan and/or by a predetermined excess value. These approaches are simple and make it easy for the driver to learn for how long and how strongly the driver needs to steer away from the current target position to change the target position.

According to an embodiment, only a limited number of target positions is allowed. This beneficially allows the driver to select one of the limited number of target positions. The driver will learn the available target positions and can switch between them as desired simply by steering the vehicle towards the desired target position.

The limited number of allowable target positions may preferably be at least 3. The limited number of allowable target positions may preferably be at most 9, preferably at most 5. These numbers have proven to strike a good balance between being able to account for the driver's needs on the one hand and the driver being able to differentiate between the allowable target positions and being able to select the desired target position on the other hand. The lane center represents one target position. Thus, the numbers mentioned include the target position which corresponds to the lane center.

According to an embodiment, the method further includes detecting if a driver is fighting a lane centering system based on the steering behavior parameter and changing the target position when the driver is fighting the lane centering system. Explicit determination of a driver fighting the lane centering system can beneficially facilitate the measures described above as well as further measures, such as changing the target position more quickly or warning the driver or an owner of the vehicle. It is, thus, possible to maintain the core competence of the lane centering system, especially in cases in which it would normally produce a behavior which does not perfectly fit the driver's needs. Preferably, the target position is only changed when the driver is fighting the lane centering system for a predetermined time and/or at a predetermined intensity.

According to an embodiment, the target position may only be changed up to a maximum distance from the lane center. This improves safety. The maximum distance can, for example, be set based on a shape of the vehicle and/or a shape of the road or the lane and/or can be set individually for each side. A shape can preferably include a width. The maximum distance can preferably be calculated in real-time and/or based on lane shape, lane width, lane curvature, vehicle shape, and/or vehicle width.

A lane centering system for a vehicle may comprise a control unit, wherein the control unit is configured to determine a lane center, wherein the control unit is configured to determine a target position of the vehicle relative to the lane center, wherein the control unit is configured to determine a steering behavior parameter, wherein the control unit is configured to change the target position based on the steering behavior parameter, wherein the control unit is configured to change the target position faster when the change is towards the lane center compared to when the change is away from the lane center. A vehicle may comprise such a lane centering system.

The object is also achieved by an apparatus in accordance with claim 12.

An apparatus for use with a lane centering system for a vehicle comprises a control unit, wherein the control unit is configured to determine a lane center. The control unit is configured to determine a target position of the vehicle relative to the lane center. The control unit is configured to determine a steering behavior parameter. The control unit is configured to change the target position based on the steering behavior parameter. The control unit is configured to change the target position faster when the change is towards the lane center compared to when the change is away from the lane center. The control unit is configured to output the target position as a virtual lane center for the lane centering system.

The object is also achieved by a driver assistance system in accordance with claim 13.

A driver assistance system for a vehicle comprises an apparatus as described above, wherein the driver assistance system comprises a lane centering system configured to keep the vehicle at the virtual lane center outputted by the apparatus.

The object is also achieved by a driver assistance system in accordance with claim 14.

A vehicle comprises a driver assistance system as described above.

The vehicle can be, for example, a commercial vehicle, a truck, a passenger car or a bus. The vehicle can be, for example, a single vehicle, a tractor for a tractor-trailer combination or a tractor-trailer combination, such as a semi-trailer truck.

The proposed methods and devices strike a particularly beneficial balance between catering to the driver's wish and reducing driver fights on the one hand and keeping the vehicle stable in the lane on the other hand.

Any ordinal numbers used herein merely simplify reference and are not to be construed as limiting with respect to the total number of elements for which the ordinal numbers are used. In particular, the existence of the second element does not necessarily mean that a first element exists.

If devices and methods are described herein, the methods described can advantageously be developed further by the embodiments and individual features of the devices, and vice versa.

The invention is described in more detail below with reference to examples, which are shown in schematic drawings.
Fig. 1 shows a vehicle driving on a road.
Fig. 2 shows a method for adaptive lane centering.
Fig. 3 shows a graph of a steering behavior parameter over time.
Fig. 4 shows a graph of a target position over time.
Fig. 5 shows a graph of a target position over time.
Fig. 6 shows a step of changing a target position.
Fig. 7 shows a method for adaptive lane centering.
Fig. 8 shows a method for adaptive lane centering.
Fig. 9 shows a lane with a lane center and target positions.
Fig. 10 shows an apparatus for use with a lane centering system.
Fig. 11 shows a driver assistance system.
Fig. 12 shows a vehicle.

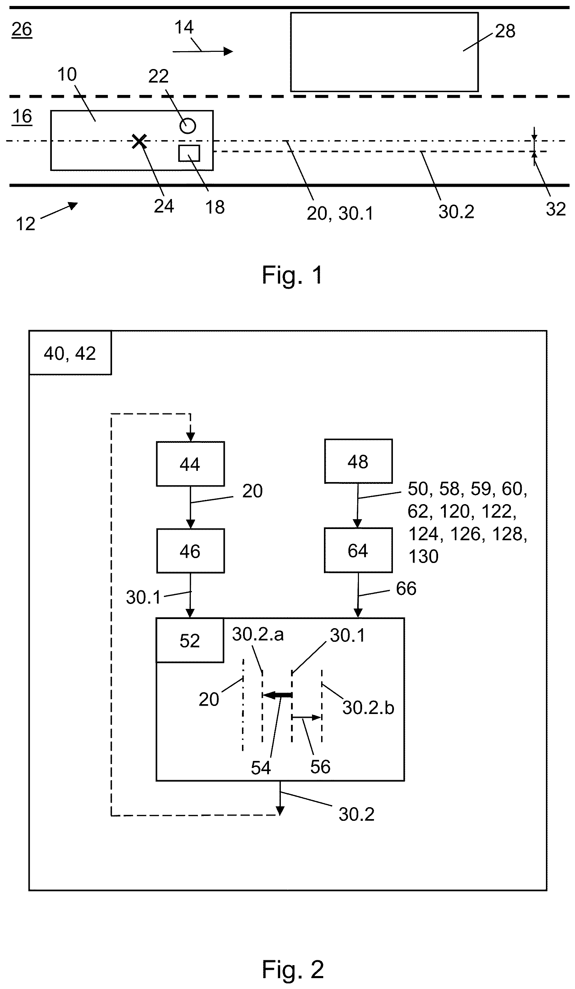

Fig. 1 shows a vehicle 10 driving on a road 12 in a driving direction 14. The vehicle 10 is driving in a lane 16 of the road 12. The vehicle 10 comprises a lane centering system 18. The lane centering system 18 is configured to determine a lane center 20 of the lane in which the vehicle 10 is driving, in this case lane 16. The lane centering system 18 is configured to assist a driver 22 of the vehicle 10 in keeping a position 24 of the vehicle 10 at the lane center 20.

The road 12 in Fig. 1 also comprises a second lane 26, which is a neighboring lane to the vehicle 10. In the second lane 26, another vehicle 28 is driving. The vehicle 28 is particularly wide. When overtaking the vehicle 28, the driver 22 of the vehicle 10 might prefer to maintain a lateral distance between the vehicle 10 and the vehicle 28 which is bigger than it would be, if the vehicle 10 was driven at the lane center 20 while overtaking.

The lane centering system 18 of the vehicle 10 of Fig. 1 is configured to keep the vehicle 10 at a target position 30, which normally or initially corresponds to the lane center 20. The normal or initial target position at the lane center 20 is referred to as 30.1 in Fig. 1.

The lane centering system 18 of the vehicle 10 of Fig. 1 is adaptive in that is allows the driver 22 to change the target position 30 of the vehicle 10 from the current target position 30.1 to another target position 30.2. Fig. 1 shows the changed target position 30.2 which is located at an offset 32 with respect to the lane center 20. The lane centering system 18 will then keep the vehicle 10 at the target position 30.2 and the driver 22 can overtake the vehicle 28 at a larger and, thus, safer distance compared to when the vehicle 10 would be kept at the lane center 20.

After having overtaken the vehicle 28, the driver 22 can change the target position 30, in the illustrated scenario that is from the target position 30.2, again, typically back towards the lane center 20 but - if necessary - even further away from the lane center 20.

The example of Fig. 1 illustrates one of many potential use cases of an adaptive lane centering system 18.

Fig. 2 shows a method 40 for adaptive lane centering 42 in a vehicle, for example in vehicle 10 of Fig. 1. The method 40 comprises determining 44 a lane center 20. The method 40 comprises determining 46 a target position 30.1 of the vehicle relative to the lane center 20. The method 40 comprises determining 48 a steering behavior parameter 50. The method 40 comprises changing 52 the target position 30.1 to a target position 30.2 based on the steering behavior parameter 50.

In the method 40 of Fig. 2, changing 52 the target position 30 is faster when changing 52 is towards 54 the lane center 20 compared to when changing 52 is away 56 from the lane center 20. In the box representing changing 52 in Fig. 2, target position 30.2.a represents a new target position after changing 52 the target position 30 towards 54 the lane center 20 and target position 30.2.b represents a new target position after changing 52 the target position 30 away from the lane center 20.

The steps of the method 40 may be repeated as indicated by the dashed arrow whenever a new target position is desired.

In the method 40 of Fig. 2, the steering behavior parameter 50 may be, for example, a deviation 58 in vehicle position from the target position 30, a vehicle position 59 relative to the lane center 20, a steering angle 60, a difference 120 between an actual steering angle 122 and a steering angle 124 requested from a lane centering system, a steering torque 62, or a difference 126 between an actual steering torque 128 and a steering torque 130 requested from a lane centering system.

The method 40 according to Fig. 2 comprises storing 64 the steering behavior parameter 50 over time as a history 66 of the steering behavior parameter 50. Changing 52 of the target position 30 is based on the history 66 of the steering behavior parameter 50.

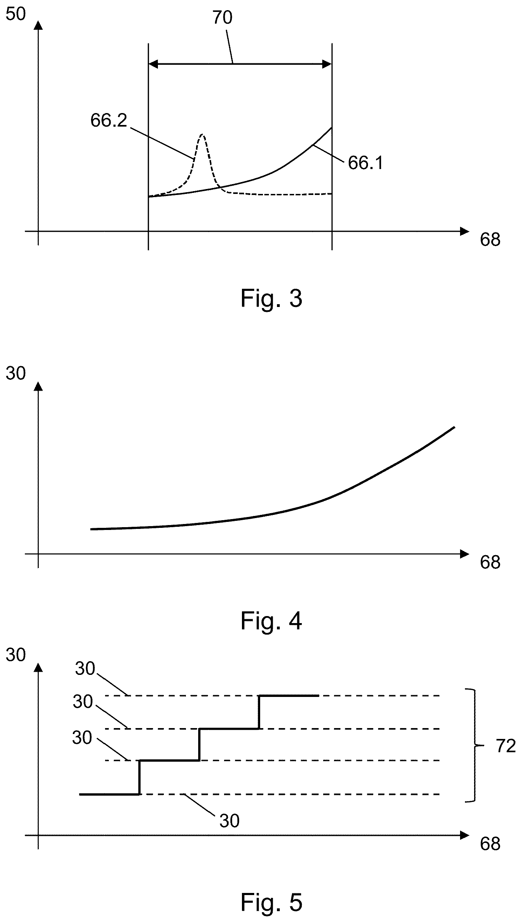

Fig. 3 illustrates examples of histories 66 of the steering behavior parameter 50. The vertical axis represents the steering behavior parameter 50. The horizontal axis represents time 68. Fig. 3 indicates a predetermined timespan 70 over which the history 66 may be stored and/or considered when changing the target position. A full line represents a first history 66.1 of the steering behavior parameter 50 over the predetermined timespan 70. A dashed line represents a second history 66.2 of the steering behavior parameter 50 over the predetermined timespan 70.

The second history 66.2 represents a case in which one relatively strong change in the steering behavior parameter occurs and - immediately afterwards - a relatively strong change back to the original value occurs. Such a history 66.2 may be due to a mistake by the driver. In such a case, it would be undesirable to immediately change the target position.

The first history 66.1, in contrast, shows a more gradual change in the steering behavior parameter 50. This may indicate that driver actually wants to steer away from the current target position and/or actually wants to change the target position.

The predetermined timespan may, for example, be at least 0,5 seconds and/or at most 8 seconds.

Fig. 4 illustrates a change in target position over time 68. In the example shown here, changing the target position 30 is performed continuously.

In Fig. 5, the full line illustrates a change in target position over time 68. In the example shown here, only a limited number 72 of target positions 30 is allowed. In other words, changing the target position 30 is performed in a step-wise manner. The limited number 72 may be, for example, at least 3 and/or at most 9, preferably at most 5.

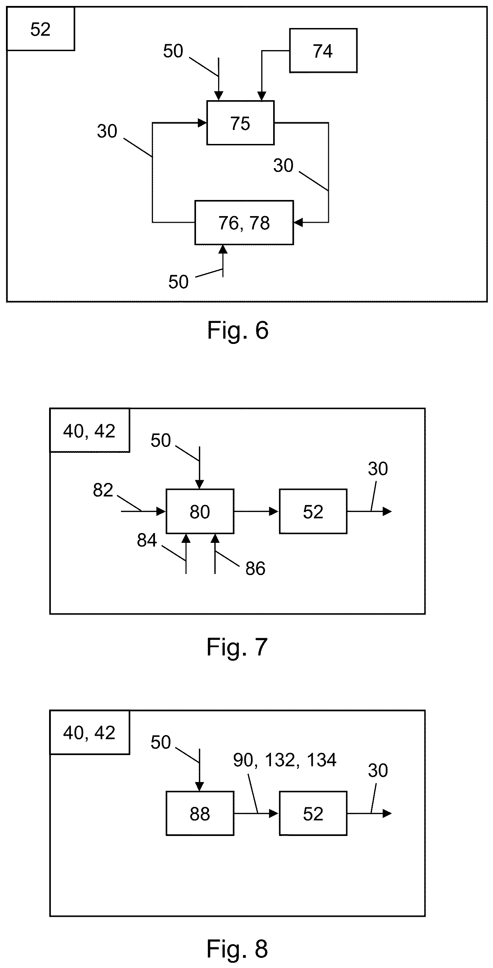

A continuous change in the target position, such as illustrated in Fig. 4, may be implemented by means of a Kalman filter. In Fig. 6, changing 52 a target position includes initializing 74, predicting 75 a target position 30, and correcting 76 the target position 30 by means of a Kalman filter 78.

Fig. 7 illustrates an example of a method 40 for adaptive lane centering 42. The method 40 comprises determining 80 if the steering behavior parameter 50 exceeds a threshold value 82 for a predetermined timespan 84 and/or by a predetermined excess value 86. In this example, changing 52 the target position 30 is performed in response to the steering behavior parameter 50 exceeding the threshold value 82 for the predetermined timespan 84 and/or by the predetermined excess value 86.

Fig. 8 illustrates another example of a method 40 for adaptive lane centering 42. The method 40 includes detecting 88 if a driver is fighting 90 a lane centering system based on the steering behavior parameter 50 and changing 52 the target position 30 when the driver is fighting 90 the lane centering system. Preferably, the target position 30 is only changed when the driver is fighting 90 the lane centering system for a predetermined time 132 and/or at a predetermined intensity 134.

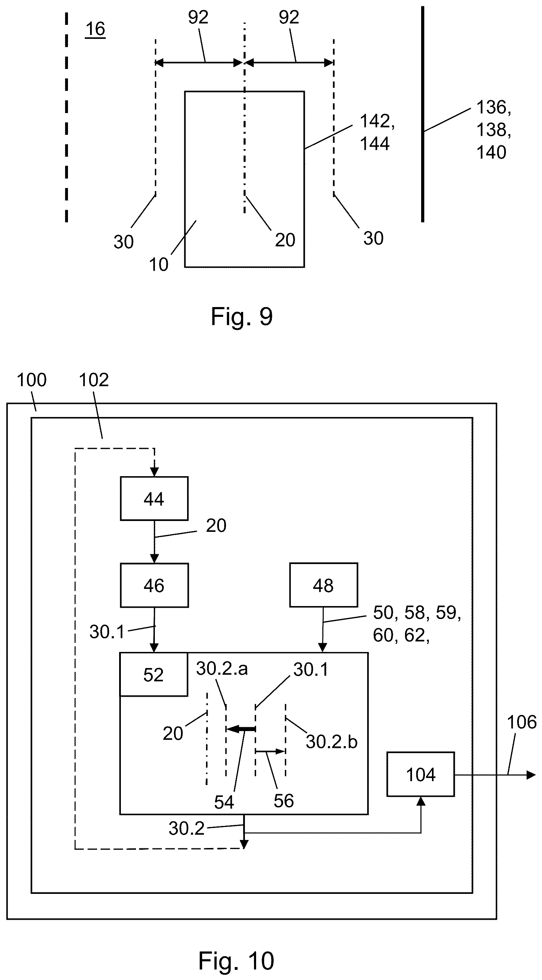

Fig. 9 shows a lane 16 with a lane center 20. Fig. 9 further shows two target positions 30. The target position 30 may, in this example, only be changed up to a maximum distance 92 from the lane center 20. Both target positions are shown in

Fig. 9 at the maximum distance 92 from the lane center 20. Preferably, the maximum distance 92 is calculated based on a lane shape 136, a lane width 138, a lane curvature 140, a vehicle shape 142, and/or a vehicle width 144. The maximum distance 92 can be set individually for each side.

Fig. 10 shows an apparatus 100 for use with a lane centering system for a vehicle. The apparatus 100 comprises a control unit 102. The control unit 102 is configured to determine 44 a lane center 20. The control unit 102 is configured to determine 46 a target position 30 of the vehicle relative to the lane center 20. The control unit 102 is configured to determine 48 a steering behavior parameter 50. The control unit 102 is configured to change 52 the target position 30 based on the steering behavior parameter 50. The control unit 102 is configured to change 52 the target position 30 faster when the change 52 is towards 54 the lane center 20 compared to when the change 52 is away 56 from the lane center 20. The control unit 102 is configured to output 104 the target position 30 as a virtual lane center 106 for the lane centering system.

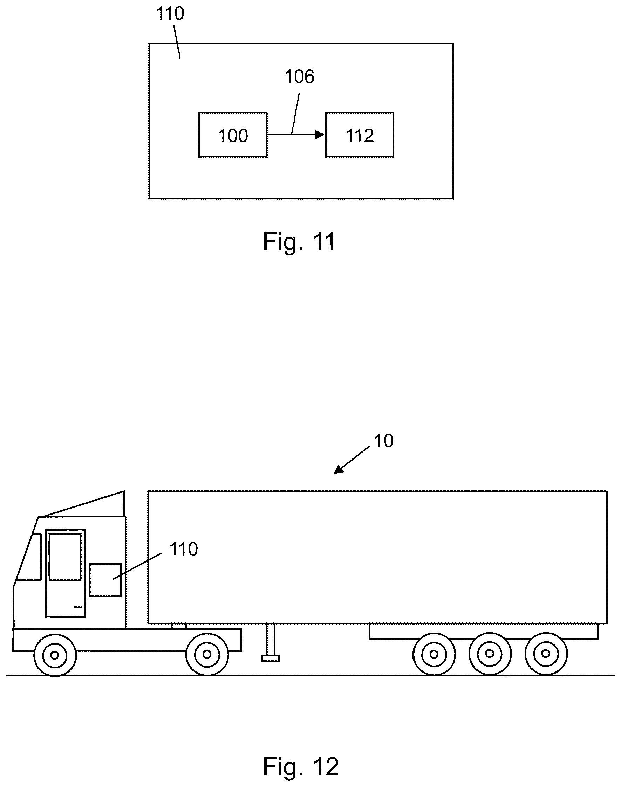

Fig. 11 shows a driver assistance system 110 for a vehicle. The driver assistance system 110 comprises an apparatus 100 according to Fig. 10. The driver assistance system 110 comprises a lane centering system 112 configured to keep the vehicle at the virtual lane center 106 outputted by the apparatus 100.

Fig. 12 shows a vehicle 10. In this example, the vehicle 10 is a semi-trailer truck. The vehicle 10 comprises a driver assistance system 110, for example configured in accordance with Fig. 11.

Where similar or identical elements are shown in different figures, reference numerals are assigned accordingly. Multiple descriptions of similar or identical elements have been avoided for the sake of clarity. Nevertheless, the embodiments of the figures can be combined with each other and developed further in accordance with the other embodiments and/or their individual features.

### List of references (part of the description)

- 10: vehicle
- 12: road
- 14: driving direction
- 16: lane
- 18: lane centering system
- 20: lane center
- 22: driver
- 24: position
- 26: lane
- 28: vehicle
- 30: target position
- 32: offset
- 40: method
- 42: adaptive lane centering
- 44: determining
- 46: determining
- 48: determining
- 50: steering behavior parameter
- 52: changing
- 54: towards
- 56: away
- 58: deviation
- 59: vehicle position relative to the lane center
- 60: steering angle
- 62: steering torque
- 64: storing
- 66: history
- 68: time
- 70: timespan
- 72: number of target positions
- 74: initializing
- 75: predicting
- 76: correcting
- 78: Kalman filter
- 80: determining
- 82: threshold value
- 84: timespan
- 86: excess value
- 88: detecting
- 90: fighting
- 92: maximum distance
- 100: apparatus
- 102: control unit
- 104: output
- 106: virtual lane center
- 110: driver assistance system
- 112: lane centering system
- 120: difference
- 122: actual steering angle
- 124: steering angle
- 126: difference
- 128: actual steering torque
- 130: steering torque
- 132: predetermined time
- 134: predetermined intensity
- 136: lane shape
- 138: lane width
- 140: lane curvature
- 142: vehicle shape
- 144: vehicle width

## Claims

1. Method (40) for adaptive lane centering (42) in a vehicle (10),
the method (40) comprising:
determining (44) a lane center (20),
determining (46) a target position (30) of the vehicle (10) relative to the lane center (20),
determining (48) a steering behavior parameter (50),
changing (52) the target position (30) based on the steering behavior parameter (50),
wherein changing (52) the target position (30) is faster when changing (52) is towards (54) the lane center (20) compared to when changing (52) is away (56) from the lane center (20).

2. Method (40) according to claim 1,
wherein the steering behavior parameter (50) is a deviation (58) in vehicle position from the target position (30), a vehicle position (59) relative to the lane center (20), a steering angle (60), a difference (120) between an actual steering angle (122) and a steering angle (124) requested from a lane centering system (112), a steering torque (62), or a difference (126) between an actual steering torque (128) and a steering torque (130) requested from a lane centering system (112).

3. Method (40) according to one of the preceding claims,
wherein changing (52) the target position (30) is based on a history (66) of the steering behavior parameter (50).

4. Method (40) according to claim 3,
wherein the history (66) is a history (66) over a predetermined timespan (70), wherein the predetermined timespan (70) is at least 0,5 seconds and/or at most 8 seconds.

5. Method (40) according to one of the preceding claims,
wherein changing (52) the target position (30) is performed continuously.

6. Method (40) according to one of the preceding claims,
wherein changing (52) the target position (30) is performed based on a Kalman filter (78).

7. Method (40) according to one of the preceding claims,
wherein changing (52) the target position (30) is performed in response to the steering behavior parameter (50) exceeding a threshold value (82) for a predetermined timespan (84) and/or by a predetermined excess value (86).

8. Method (40) according to one of the preceding claims,
wherein only a limited number (72) of target positions (30) is allowed.

9. Method (40) according to one of the preceding claims,
wherein the limited number (72) is at least 3 and/or at most 9, preferably at most 5.

10. Method (40) according to one of the preceding claims,
wherein the method (40) further includes:
detecting (88) if a driver (22) is fighting (90) a lane centering system (112) based on the steering behavior parameter (50) and
changing (52) the target position (30) when the driver (22) is fighting (90) the lane centering system (112),
preferably wherein the target position (30) is only changed when the driver is fighting (90) the lane centering system (112) for a predetermined time (132) and/or at a predetermined intensity (134).

11. Method (40) according to one of the preceding claims,
wherein the target position (40) may only be changed up to a maximum distance (92) from the lane center (20),
preferably wherein the maximum distance (92) is calculated based on a lane shape (136), a lane width (138), a lane curvature (140), a vehicle shape (142), and/or a vehicle width (144).

12. Apparatus (100) for use with a lane centering system (112) for a vehicle (10), wherein the apparatus (10) comprises a control unit (102),
wherein the control unit (102) is configured to determine (44) a lane center (20),
wherein the control unit (102) is configured to determine (46) a target position (30) of the vehicle (10) relative to the lane center (20),
wherein the control unit (102) is configured to determine (48) a steering behavior parameter (50),
wherein the control unit (102) is configured to change (52) the target position (30) based on the steering behavior parameter (50),
wherein the control unit (102) is configured to change (52) the target position (30) faster when the change (52) is towards (54) the lane center (20) compared to when the change (52) is away (56) from the lane center (20),
wherein the control unit (102) is configured to output (104) the target position (30) as a virtual lane center (106) for the lane centering system (112).

13. Driver assistance system (110) for a vehicle (10),
wherein the driver assistance system (110) comprises an apparatus (100) according to claim 12,
wherein the driver assistance system (110) comprises a lane centering system (112) configured to keep the vehicle (10) at the virtual lane center (106) outputted (104) by the apparatus (100).

14. Vehicle (10) comprising a driver assistance system (110) in accordance with claim 13.
